# EUROPÄISCHE PATENTANMELDUNG

(11) **EP 3 366 465 A1**
(43) Veröffentlichungstag der Anmeldung: **29.08.2018**
(21) Anmeldenummer: 18159157.9
(22) Anmeldetag: 28.02.2018
(51) Int. Cl.: B32B 5/18, B32B 5/22, B32B 5/24, B32B 7/04, B32B 27/06, B32B 27/12, B32B 27/30, B32B 27/32, B32B 37/04, E04B 1/76, E04B 1/80, C08K 7/26, C08K 7/28, E04B 1/78, E04B 1/94, E04B 1/74

(54) **VERFAHREN ZUR HERSTELLUNG VON ZUMINDEST ZWEILAGIGEN PLATTEN AUS MINDESTENS EINER AUSGANGSPLATTE AUS EINEM ANORGANISCHEN ISOLATIONSMATERIAL**

(30) Priorität: 28.02.2017 EP 17158373
(71) Anmelder: BASF SE, 67056 Ludwigshafen am Rhein (DE)
(72) Erfinder: DIETZEN, Franz-Josef, 67056 Ludwigshafen (DE); KICIAK, Thomas, 67056 Ludwigshafen (DE); AHMADNIAN, Fatemeh, 67056 Ludwigshafen (DE); SOUVESTRE, Johann, 92593 Levallois-Perret Cedex France (FR)
(74) Vertreter: Ellwanger, Arndt

(57) **Zusammenfassung**

Die vorliegende Erfindung betrifft ein Verfahren zur Herstellung einer zumindest zweilagigen Platte durch thermisches Verschweißen von mindestens einer dünneren thermoplastischen Schaumstoffplatte (TS) und mindestens einer dünneren Platte (IM) als Ausgangsplatten. Die mindestens eine dünnere thermoplastische Schaumstoffplatte (TS) weist eine größere Dicke auf als die mindestens eine dünnere Platte (IM) und die mindestens eine dünnere Platte (IM) ist aus einem anorganischen Isolationsmaterial hergestellt. Weiterhin betrifft die vorliegende Erfindung die zumindest zweilagige Platte als solche sowie deren Verwendung als Brandschutz für die Außenfassade eines Bauwerks. Darüber hinaus betrifft sie auch die Außenwand (AW), auf die die zumindest zweilagige Platte aufgebracht ist.

## Beschreibung

Die vorliegende Erfindung betrifft ein Verfahren zur Herstellung einer zumindest zweilagigen Platte durch thermisches Verschweißen von mindestens einer dünneren thermoplastischen Schaumstoffplatte (TS) und mindestens einer dünneren Platte (IM) als Ausgangsplatten. Die mindestens eine dünnere thermoplastische Schaumstoffplatte (TS) weist eine größere Dicke auf als die mindestens eine dünnere Platte (IM) und die mindestens eine dünnere Platte (IM) ist aus einem anorganischen Isolationsmaterial hergestellt. Weiterhin betrifft die vorliegende Erfindung die zumindest zweilagige Platte als solche sowie deren Verwendung als Brandschutz für die Außenfassade eines Bauwerks. Darüber hinaus betrifft sie auch die Außenwand (AW), auf die die zumindest zweilagige Platte aufgebracht ist.

Die Anzahl der Lagen der zumindest zweilagigen Platte als solche ergibt sich aus der Anzahl der dünneren Platten (IM) und (TS), die miteinander thermisch verschweißt werden. Wenn beispielsweise drei dünnere Ausgangsplatten (IM) und (TS) miteinander thermisch verschweißt werden, wird eine dreilagige Platte als solche erhalten, im Fall von vier dünneren Ausgangsplatten (IM) und (TS) ergibt sich demzufolge eine vierlagige Platte als solche.

DE-A 44 21 016 offenbart ein Verfahren zur Herstellung von CO₂-geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

DE-A 10 2012 204 822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwertes bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden.

WO 2015/011016 betrifft ein Verfahren zur Herstellung von zumindest zweilagigen thermoplastischen Schaumstoffplatten durch thermisches Verschweißen von mindestens zwei dünneren thermoplastischen Schaumstoffplatten. Bei diesem Verfahren werden mindestens zwei Heizelemente auf zueinander versetzten Ebenen zwischen die zu verschweißenden Oberflächen der dünneren thermoplastischen Schaumstoffplatten geführt, wobei sich die Schaumstoffplatten und die Heizelemente nicht gegenseitig berühren. Dabei werden entweder zwei Heizelemente aus jeweils zueinander entgegengesetzten Richtungen in den Zwischenraum zwischen die beiden Ausgangsplatten eingeführt und/oder die zwei Heizelemente werden in jeweils zueinander entgegengesetzten Richtungen aus diesem Zwischenraum wieder entfernt.

EP-A 1 201 838 betrifft eine Dämmplatte für die Wärmeisolierung von Gebäudefassaden. Die zumindest zweischichtige Dämmplatte weist eine erste relativ dünne Materialschicht aus expandiertem Polystyrol auf, wobei im Fall einer dreischichtigen Dämmplatte auch die dritte Schicht der ersten Schicht entspricht, die folglich als Außenflächen der Dämmplatte verwendet werden. Die zweite Schicht der Dämmplatte hat hingegen eine Dicke, die einem Vielfachen der Dicke der ersten und gegebenenfalls der dritten Schicht entspricht, wobei die zweite Schicht aus einem Polyurethanschaum besteht. Die jeweiligen Dämmplatten werden aus den entsprechenden Ausgangsplatten beim Herstellungsprozess in situ miteinander verbunden, wobei die auf das Polyurethan basierende Schicht gleichzeitig als Klebeschicht fungiert. Ein Verkleben oder insbesondere Verschweißen von bereits fertigen Ausgangsplatten ist in EP-A 1 201 838 ebenfalls nicht beschrieben.

CH-A 706 454 betrifft eine Dämmplatte und ein Verfahren zur Herstellung einer Dämmplatte. Die Dämmplatte wird zur Wärmeisolation von Außenfassaden, Wänden oder anderen Teilen von Gebäuden verwendet und basiert auf expandiertem Polystyrol (EPS). Die Dämmplatte kann mehrteilig sein und umfasst eine EPS-Hauptplatte und zumindest eine Deckplatte, die auf der Vorder- oder Rückseite der Hauptplatte angeordnet ist. Die Hauptplatte ist in Folge athermaner Bestandteile, insbesondere Graphitpartikel, dunkel gefärbt, während die entsprechende Deckplatte, die ebenfalls auf EPS basiert, hell bis weiß erscheint, was durch die Zugabe anderer atherman wirkender Stoffe, insbesondere Titandioxid, erzielt wird. Die einzelnen Ausgangsplatten der Dämmplatte können auf beliebige Weise miteinander verbunden werden, beispielsweise durch thermisches Verschweißen, durch Quellschweißen (unter Verwendung eines Lösungsmittels) oder unter Verwendung eines Klebstoffs. In CH-A 706 454 wird jedoch nicht offenbart, dass außer auf expandiertem Polystyrol (EPS) basierten Ausgangsplatten auch andere Ausgangsplatten verwendet werden können.

EP-B 2 665 876 betrifft eine isolierte Gebäudewand umfassend ein Wärmedämmverbundsystem und eine Gebäudeaußenwand, wobei das Wärmedämmverbundsystem an der bauwerksfernen Seite der Gebäudewand angebracht ist. Das Wärmeverbundsystem umfasst eine zumindest zweilagige Wärmedämmschicht, wobei mindestens zwei Lagen dieser Wärmedämmschicht jeweils ein Aerogel und anorganische Fasern sowie gegebenenfalls anorganische Füllstoffe enthalten. Die einzelnen Lagen der Wärmedämmschicht sind mit einem anorganischen Bindemittel, wie Kaliumwasserglas oder Zement, miteinander verbunden und das Wärmedämmverbundsystem weist einen Brennwert von weniger als 3 MJ pro kg auf. Bei dem Aerogel kann es sich um anorganische Aerogele auf der Basis von Siliciumoxiden (Silicaten) handeln.

EP 16 182 632.6 betrifft ein Verfahren zur Herstellung von zumindest zweilagigen Platten durch Verbinden von mindestens einer dünneren thermoplastischen Schaumstoffplatte und mindestens einer dünneren Platte als Ausgangsplatten. Die dünnere Platte ist dabei aus einem Material hergestellt, das einen mittleren Zelldurchmesser ≤ 1000 nm aufweist, vorzugsweise aus mindestens einem Aerogel und/oder Xerogel. Die zumindest zweilagigen Platten eignen sich zur Verwendung als Wärmedämmstoff.

Im Stand der Technik ist somit nirgendwo offenbart, dass auch zumindest zweilagige Platten hergestellt werden können, die einerseits auf mindestens einer dünneren Platte aus einem anorganischen Isolationsmaterial und andererseits auf mindestens einer dünneren thermoplastischen Schaumstoffplatte basieren, die eine größere Dicke aufweist als die mindestens eine dünnere Platte.

Die der vorliegenden Erfindung zugrunde liegende Aufgabe besteht in der Bereitstellung eines neuen Verfahrens zur Herstellung von zumindest zweilagigen Platten bzw. in den zumindest zweilagigen Platten als solchen.

Gelöst wird die Aufgabe durch ein Verfahren zur Herstellung einer zumindest zweilagigen Platte durch thermisches Verschweißen von mindestens einer dünneren thermoplastischen Schaumstoffplatte (TS) und mindestens einer dünneren Platte (IM), wobei die mindestens eine dünnere thermoplastische Schaumstoffplatte (TS) eine größere Dicke aufweist als die mindestens eine dünnere Platte (IM) und die mindestens eine dünnere Platte (IM) aus einem anorganischen Isolationsmaterial hergestellt ist.

Die mit dem erfindungsgemäßen Verfahren hergestellten zumindest zweilagigen Platten zeichnen sich dadurch aus, dass die vorteilhaften Eigenschaften der einzelnen Ausgangsplatten miteinander kombiniert werden können, sodass zwei- oder mehrlagige Platten mit auf das jeweilige Anforderungsprofil maßgeschneiderten Materialeigenschaften bereitgestellt werden können.

Diese zwei- oder mehrlagigen Platten weisen neben einer guten Verarbeitbarkeit eine niedrige Wärmeleitfähigkeit sowie vorteilhafte Eigenschaften im Zusammenhang mit einer verringerten Brennbarkeit sowie dem Erfüllen von Brandtests auf.

Die erfindungsgemäßen zumindest zweilagigen Platten unterschreiten vorzugsweise bei dem sogenannten SBI (single-burner-item)-Test gemäß DIN EN 13823 (2015) die im Rahmen der Baustoffklassifizierung gemäß DIN EN 13501-1 (2010) genannten Grenzen hinsichtlich der "Wärmefreisetzungsrate (FIGRA)" und der "Gesamten freigesetzten Wärme während 600 s (THR₆₀₀ₛ)", die für die Einstufung in Klasse B relevant sind. Die Wärmefreisetzungsrate (FIGRA) ist nach DIN EN 13501-1 (2010) das Maximum des Quotienten aus der Probe und dem zugehörigen Zeitpunkt, wobei ein THR-Schellenwert von 0,2 MJ benutzt wird. Die erfindungsgemäßen Platten zeigen somit im Gegensatz zu einer reinen thermoplastischen Schaumstoffplatte im SBI-Test ein deutlich reduziertes Brandverhalten.

Vorzugsweise unterschreiten die erfindungsgemäßen zumindest zweilagigen Platten auch bei dem Brandtest gemäß EN ISO 11925-2 (2010) die im Rahmen der Baustoffklassifizierung gemäß DIN EN 13501-1 (2010) genannte Grenze hinsichtlich der Flammhöhe, die ebenfalls für die Einstufung in Klasse B relevant ist. Die zumindest zweilagigen Platten weisen damit bei dem Brandtest gemäß EN ISO 11925-2 (2010) vorzugsweise eine Flammhöhe von ≤ 150 mm auf. Hierbei ist es bevorzugt, dass die zu verschweißenden Oberflächen von mindestens einer dünneren thermoplastischen Schaumstoffplatte (TS) mit strukturierten Vertiefungen versehen sind.

Demzufolge können durch die vorliegende Erfindung auf einfache Weise brandgeschützte zumindest zweilagige Platten bereitgestellt werden, die als Dämmmaterialien mit niedrigen Wärmeleitfähigkeiten eingesetzt werden können und die zudem über die von Standard- (thermoplastischen) Schaumstoffen bekannten Eigenschaften, wie gute Putzhaftung, mechanische Unempfindlichkeit, leichte Verarbeitbarkeit und/oder Verfügbarkeit in beliebigen Dicken verfügen.

Die durch thermisches Verschweißen hergestellten zumindest zweilagigen Platten zeichnen sich auch dadurch aus, dass die entsprechende Anzahl an dünneren Ausgangsplatten (TS) und (IM) auf sehr stabile Weise zu den zumindest zweilagigen Platten (Produkt) zusammengefügt werden kann. Die im erfindungsgemäßen Verfahren gebildeten Schweißnähte, die aufgrund des thermischen Verschweißens die einzelnen dünneren Ausgangsplatten zu der zumindest zweilagigen Platte miteinander verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.

Das erfindungsgemäße Verfahren ist in seiner bevorzugten Ausführungsform von seinem Prinzip her ein sogenanntes "kontaktloses Verschweißen" (oder "berührungsloses Erhitzen"), da die Wärmeübertragung von den Heizelementen auf die zu verschweißenden Oberflächen der dünneren thermoplastischen Schaumstoffplatte (TS) bzw. der dünneren Platte (IM) (auch als "Ausgangsplatten" bezeichnet) ohne direkten Kontakt zwischen Heizelement und Ausgangsplatte stattfindet. Dies hat den Vorteil, dass im erfindungsgemäßen Verfahren keine (oder nur in sehr geringem Umfang) Dellen bzw. Einfallstellen auf den Oberflächen der zu verschweißenden Ausgangsplatten gebildet werden. Diese Einfallstellen sind jedoch insbesondere in den Randbereichen der Ausgangsplatten ein generelles Problem bei Verfahren, die auf einem direkten Kontakt zwischen Heizelement und zu verschweißender Oberfläche beruhen. Solche Dellen/Einfallstellen führen zu verstärkten Inhomogenitäten in der Schweißnaht, was sich wiederum negativ auf die Stabilität der zumindest zweilagigen Platten auswirken kann.

Aufgrund der Verwendung von mindestens zwei Heizelementen, die auf parallel zueinander versetzten Ebenen und ohne direkten Kontakt mit den zu verschweißenden Ausgangsplatten im Rahmen dieser Ausführungsform des erfindungsgemäßen Verfahrens eingesetzt werden, ist als weiterer Vorteil festzuhalten, dass die zu verschweißenden Oberflächen der Ausgangsplatten in einem weit geringerem Maße einer unterschiedlichen Wärmebelastung ausgesetzt sind im Vergleich zu Verfahren gemäß dem Stand der Technik. Bei der Verwendung von nur einem Heizelement, das gegebenenfalls auch zweigeteilt sein kann, aber wo die einzelnen Teile auf einer Ebene geführt werden, sind im Gegensatz zum erfindungsgemäßen Verfahren die einzelnen Bereiche der jeweiligen Plattenoberfläche der zu verschweißenden Ausgangsplatten einer unterschiedlichen Wärmebelastung ausgesetzt, weil insbesondere die Randbereiche der Ausgangsplatten im Durchschnitt über eine deutlich längere Zeitspanne der entsprechenden Wärmequelle direkt oder indirekt ausgesetzt sind. Dies hat wiederum Auswirkungen auf die Homogenität der Schweißnaht.

In diesem Zusammenhang ist auch zu berücksichtigen, dass bei beweglichen Heizelementen durch die Dynamik des Ein- und Ausfahrens der Heizelemente zwischen die zu verschweißenden Ausgangsplatten kalte Luft hinter dem Heizelement hergezogen wird, während hingegen warme Luft vor dem Heizelement "aus dem Zwischenraum hinausgeschoben wird". Die auf diese Weise eintretende Pfropfenströmung oder turbulente Strömung zwischen den zu verschweißenden Platten hat wiederum negative Auswirkungen auf die Homogenität und somit Stabilität der zu bildenden Schweißnaht. Aufgrund der erfindungsgemäßen Verwendung von zwei beweglichen Heizelementen auf zueinander parallelen Ebenen wird hingegen Luft nur in einem deutlich geringerem Maße verdrängt und führt daher nicht zu einem unkontrollierten Ein- und Ausströmen von zu kalter oder heißer Luft. Insbesondere wenn im erfindungsgemäßen Verfahren zwei Heizelemente verwendet werden, die auf parallelen Ebenen aus zueinander entgegengesetzten Richtungen in den Zwischenraum zwischen den Ausgangplatten eingeführt werden, kann das Problem der Pfropfenströmung bzw. turbulenten Strömung deutlich minimiert werden und eine noch homogenere Schweißnaht zwischen den zu verschweißenden Ausgangsplatten erzielt werden. Dieser Effekt kann weiterhin verstärkt werden, wenn auch das Ausfahren der beiden Heizelemente in jeweils entgegengesetzte Richtungen erfolgt. Besonders vorteilhaft ist dabei das Einfahren und Ausfahren der einzelnen Platten ohne Richtungsänderung, weil dadurch das erfindungsgemäße Verfahren schneller durchgeführt werden kann im Vergleich zu einer Variante mit Richtungsumkehr der beiden Heizelemente beim Ausfahrschritt im Vergleich zum Einfahrschritt.

Ein weiterer Vorteil ist im erfindungsgemäßen Verfahren darin zu sehen, dass hinsichtlich der Plattendicken der Ausgangsplatten keine Begrenzungen erforderlich sind. Im Gegensatz dazu können in Verfahren gemäß dem Stand der Technik, beispielsweise wie sie in DE-A 10 2012 204 822 offenbart sind, nur Ausgangsplatten mit einer maximalen Dicke von 80 bis 100 mm verarbeitet werden, weil aufgrund des prinzipiell V-förmigen Zuführens (und Bewegens) der Ausgangsplatten mindestens eine der Ausgangsplatten während des thermischen Verschweißens geknickt wird. Da bei diesem Verfahren ein prinzipiell starres Heizelement, insbesondere ein Heizschwert, verwendet wird, müssen die Ausgangsplatten über das Heizelement bewegt werden. Im Gegensatz dazu wird im erfindungsgemäßen Verfahren das Heizelement zwischen den - in diesem Verfahrensstadium - prinzipiell starren Ausgangsplatten bewegt. Ein Bewegen der Ausgangsplatten findet im erfindungsgemäßen Verfahren prinzipiell erst nach Entfernung der Heizelemente aus dem Plattenzwischenraum statt, wobei die zu verschweißenden Ausgangsplatten durch Bewegung von mindestens einer der Ausgangsplatten miteinander verbunden werden. Mit dem erfindungsgemäßen Verfahren lassen sich so problemlos drei- oder höherlagige Platten von beliebiger Dicke herstellen.

Ein weiterer Vorteil in einer Ausführungsform des erfindungsgemäßen Verfahrens ist darin zu sehen, dass prinzipiell sehr kurze Umstellzeiten durchgeführt werden können. Unter "Umstellzeiten" wird erfindungsgemäß die Zeit verstanden, die zwischen Erhitzen bzw. Aufschmelzen der Oberfläche der Ausgangsplatte und dem Zusammenfügen der erhitzten bzw. aufgeschmolzenen Ausgangsplatten verstreicht. Im erfindungsgemäßen Verfahren ist dies somit die Zeitspanne, die mit dem Einführen von wenigstens zwei Heizelementen gemäß Schritt b) beginnt und mit dem Zusammenführen der entsprechenden Ausgangsplatten gemäß Schritt e) endet. Eine kurze Umstellzeit kann insbesondere aufgrund der Beweglichkeit der Heizelemente im Rahmen eines kontaktlosen Verschweißens erzielt werden.

Im Rahmen der vorliegenden Erfindung wird unter den Begriffen "Thermoplast" oder "thermoplastische Schaumstoffplatte" Folgendes verstanden. Thermoplaste, auch Plastomere genannt, sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden. Thermoplastische Schaumstoffplatten sind folglich Schaumstoffe in Plattenform, die über die vorgenannten Polymereigenschaften eines Thermoplastes verfügen. Eine thermoplastische Schaumstoffplatte ist überwiegend, also zu mindestens 50 Gew.-%, aus mindestens einem Thermoplast hergestellt (bezogen auf das Gesamtgewicht der jeweiligen Platten). Gegebenenfalls können noch weitere Materialien/Komponenten in der thermoplastischen Schaumstoffplatte enthalten sein, die selbst keine Thermoplasten sind. Vorzugsweise ist die thermoplastische Schaumstoffplatte vollständig oder nahezu vollständig (mindestens 95 Gew.-%) aus mindestens einem Thermoplast hergestellt.

Im Rahmen der vorliegenden Erfindung wird unter dem Begriff "Platte (IM), die aus einem anorganischen Isolationsmaterial hergestellt ist" Folgendes verstanden. Das entsprechende anorganische Isolationsmaterial ist plattenförmig angeordnet bzw. als Platte hergestellt. Eine solche dünnere Platte (IM) ist überwiegend, also zu mindestens 50 Gew.-%, aus mindestens einem anorganischen Isolationsmaterial hergestellt (bezogen auf das Gesamtgewicht der jeweiligen Platte). Gegebenenfalls können noch weitere Materialien/Komponenten in der entsprechenden dünneren Platte (IM) enthalten sein, die selbst kein anorganisches Isolationsmaterial sind. Vorzugsweise ist die dünnere Platte (IM) vollständig oder nahezu vollständig (mindestens 95 Gew.-%) aus mindestens einem anorganischen Isolationsmaterial hergestellt.

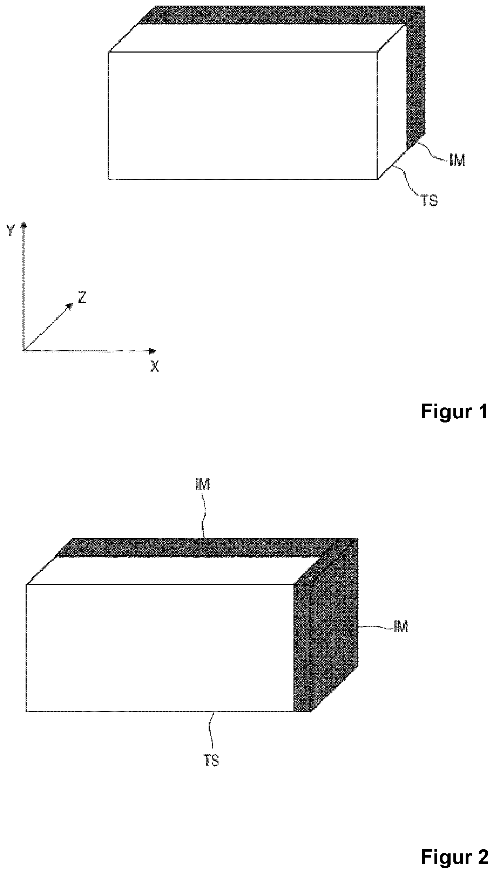

Bezogen auf ein rechtwinkliges Koordinatensystem wird im Rahmen der vorliegenden Erfindung die Länge einer Ausgangsplatte, bzw. einer zumindest zweilagigen Platte als solche, auch als "x-Richtung" bezeichnet, die entsprechende Breite als "y-Richtung" und die Dicke als "z-Richtung". Die Dicke der zumindest zweilagigen Platte steigt mit zunehmender Anzahl von thermisch verschweißten Ausgangsplatten kontinuierlich an. In Figur 1 sind x-, y- und z-Richtung anhand einer zweilagigen Platte dargestellt.

Die vorstehend bzw. nachfolgend angegebenen Werte hinsichtlich der Dicke der dünneren Platten (TS) und (IM) beziehen sich auf die entsprechenden Werte einer Ausgangsplatte, die für sich genommen, noch keinen thermischen Verschweißungsschritt erfahren hat.

Nachfolgend werden das erfindungsgemäße Herstellungsverfahren der zumindest zweilagigen Platten sowie die erfindungsgemäßen zumindest zweilagigen Platten als solche näher definiert.

Die mit dem erfindungsgemäßen Verfahren hergestellte Platte ist zumindest zweilagig, sie kann also genau zwei Lagen aufweisen oder dreilagig, vierlagig, fünflagig oder noch höherlagig sein. Wie vorstehend bereits aufgeführt, ergibt sich die Anzahl der Lagen der Platten als solche aus der Anzahl der dünneren Platten (TS) und (IM), die miteinander thermisch verschweißt werden. Die dünneren Platten werden auch als Ausgangsplatten bezeichnet.

Im Falle einer zweilagigen Platte als solche werden also zwei dünnere Platten, eine erste dünnere thermoplastische Platte und eine zweite dünnere Platte, die aus einem anorganischen Isolationsmaterial hergestellt ist, miteinander thermisch verschweißt.

Bei einer drei- oder vierlagigen Platte als solche, werden drei bzw. vier dünnere Platten miteinander thermisch verschweißt.

Sofern noch höherlagige Platten als solche, hergestellt werden sollen, beispielsweise eine zehnlagige Platte, müssen demzufolge die der Anzahl der Lagen entsprechende Anzahl an dünneren Platten (TS) und (IM), beispielsweise zehn dünnere Platten, miteinander thermisch verschweißt werden.

Vorzugsweise ist die erfindungsgemäße Platte zweilagig, dreilagig oder vierlagig, insbesondere ist die erfindungsgemäße Platte zweilagig.

Das thermische Verschweißen als solches (Durchführung), wird weiter unten im Text im Zusammenhang mit dem erfindungsgemäßen Herstellungsverfahren näher definiert.

Voraussetzung bei jeder zumindest zweilagigen Platte, die nach dem erfindungsgemäßen Verfahren hergestellt wird, ist, dass in der entsprechenden Anzahl an Lagen (also die konkrete Anzahl an dünneren Ausgangsplatten (IM) und (TS)) immer mindestens eine dünnere thermoplastische Schaumstoffplatte (TS) und mindestens eine dünnere Platte (IM) als Ausgangsplatten verwendet werden. Während die dünnere Ausgangsplatte (TS) zwingend thermoplastisch ist, ist die dünnere Platte (IM) hingegen aus einem anorganischen Isolationsmaterial hergestellt. Die Platte (IM) kann gegebenenfalls über thermoplastische Bestandteile in geringen Mengen verfügen, vorzugsweise ist die Platte (IM) jedoch weitgehend, insbesondere vollständig frei von thermoplastischen Bestandteilen. Im Gegensatz dazu, kann die dünnere Ausgangsplatte (TS) ebenfalls geringe Anteile an einem anorganischen Isolationsmaterial aufweisen, vorzugsweise ist die dünnere Platte (TS) jedoch weitgehend, insbesondere vollständig frei von einem anorganischen Isolationsmaterial.

In einer bevorzugten Ausführungsform der Erfindung wird eine dreilagige Platte hergestellt durch thermisches Verschweißen von einer dünneren thermoplastischen Schaumstoffplatte (TS) und zwei dünneren Platten (IM), wobei jeweils eine dünnere Platte (IM) auf jeweils einer sich gegenüberliegenden Seite der dünneren thermoplastischen Schaumstoffplatte (TS) unter Erhalt der dreilagigen Platte aufgebracht wird.

In einer weiteren bevorzugten Ausführungsform der vorliegenden Erfindung wird aus einer vorstehend beschriebenen dreilagigen Platte durch thermisches Verschweißen eine vier- oder höherlagige Platte hergestellt. Dabei wird, ausgehend von der vorstehend beschriebenen dreilagigen Platte, eine zweite dünnere thermoplastische Schaumstoffplatte (TS) auf eine von einer dünneren Platte (IM) stammenden Seite der dreilagigen Platte aufgebracht, wobei die daraus erhaltene vierlagige Platte abwechselnd insgesamt vier Lagen aus dünneren thermoplastischen Schaumstoffplatten (TS) und dünneren Platten (IM) aufweist und die erste und zweite dünnere thermoplastische Schaumstoffplatte (TS) sich auf jeweils einer gegenüberliegenden Seite einer dünneren Platte (IM) befinden, wobei gegebenenfalls zum Erhalt von höherlagigen Platten das abwechselnde Aufbringen einer weiteren dünneren Platte (IM) oder einer dünneren thermoplastischen Schaumstoffplatte (TS) mindestens einfach wiederholt wird.

Die zum thermischen Verschweißen verwendeten dünneren Ausgangsplatten (TS) und (IM) entsprechen hinsichtlich ihrer chemischen Zusammensetzung den im Rahmen der vorliegenden Erfindung hergestellten zumindest zweilagigen Platten als solchen. Bei dieser Betrachtungsweise werden jedoch beispielsweise sonstige auf die Oberflächen der Ausgangsplatten aufgebrachten Komponenten wie Absorber von elektromagnetischer Strahlung oder Flammschutzmittel, nicht berücksichtigt. Ebenso wenig werden bei dieser Betrachtungsweise die beim thermischen Verschweißen infolge der Ausbildung der Schweißnaht an den entsprechenden Oberflächen auftretenden chemischen Veränderungen/Reaktionen mitberücksichtigt. Die jeweils miteinander thermisch zu verschweißenden dünneren Ausgangsplatten weisen vorzugsweise dieselben Dimensionen auf. Vorzugsweise erfolgt das thermische Verschweißen an den jeweils flächenmäßig größten Seiten der jeweiligen Ausgangsplatten.

Die Dimensionierung der miteinander thermisch zu verschweißenden dünneren Platten (TS) und (IM) ist beliebig. Hinsichtlich ihrer Länge und Breite können sie Maße im Zentimeterbereich bis hin zu mehreren Metern aufweisen. Hinsichtlich ihrer dritten Dimension (Dicke) sind theoretisch ebenfalls beliebige Maße denkbar. Allerdings weist die mindestens eine dünnere thermoplastische Schaumstoffplatte (TS) eine größere Dicke auf als die mindestens eine dünnere Platte (IM). In der Praxis weisen die dünneren Ausgangsplatten (TS) und (IM) eine Dicke im Bereich von 1 bis 400 mm auf.

Die Dicke der im erfindungsgemäßen Verfahren hergestellten zumindest zweilagigen Platten ergibt sich aus der Gesamtdicke der insgesamt eingesetzten dünneren Platten (Ausgangsplatten). Beim thermischen Verschweißens werden die jeweils zu verschweißenden Oberflächen der thermoplastischen Ausgangsplatten zumindest etwas auf- oder angeschmolzen (Aufschmelzschritt), was in Abhängigkeit von den übertragenen Energiemengen zu einer gewissen Reduzierung der Dicke der jeweiligen thermoplastischen Ausgangsplatten führen kann. An den Stellen, an denen die Ausgangsplatten miteinander thermisch verschweißt werden, bildet sich eine Schweißnaht (S) aus. Insbesondere wenn im Rahmen des Herstellungsverfahrens ein Verpressungs- und/oder Aufschmelzschritt mit der Übertragung einer großen Energiemenge durchgeführt wird, ist die Dicke der zumindest zweilagigen Platte als solche geringer als die Summe der jeweiligen Dicken der eingesetzten Ausgangsplatten.

Vorzugsweise weist die mindestens eine dünnere thermoplastische Schaumstoffplatte (TS) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, auf.

Vorzugsweise weist die dünnere Platte (IM) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, auf.

Vorzugsweise weist die dünnere thermoplastische Schaumstoffplatte (TS) eine Dicke (z-Richtung) von 80 bis 400 mm, bevorzugt von 90 bis 300 mm, mehr bevorzugt von 100 bis 200 mm, auf.

Vorzugsweise weist die mindestens eine dünnere Platte (IM) eine Dicke (z-Richtung) von 1 bis 40 mm, bevorzugt von 3 bis 30 mm, mehr bevorzugt von 5 bis 20 mm, auf.

Vorzugsweise ist die mindestens eine dünnere thermoplastische Schaumstoffplatte (TS) mindestens um den Faktor 2, bevorzugt mindestens um den Faktor 5, mehr bevorzugt mindestens um den Faktor 10, dicker als die mindestens eine dünnere Platte (IM).

Vorzugsweise ist die mindestens eine dünnere thermoplastische Schaumstoffplatte (TS) höchstens um den Faktor 50, bevorzugt höchstens um den Faktor 30, dicker als die mindestens eine dünnere Platte (IM).

Weiterhin ist es bevorzugt, dass jede dünnere thermoplastische Schaumstoffplatte (TS) und jede dünnere Platte (IM) identische Werte für die Länge (x-Richtung) und die Breite (y-Richtung) aufweisen.

Weiterhin ist es bevorzugt, dass die mindestens eine dünnere thermoplastische Schaumstoffplatte (TS) und die mindestens eine dünnere Platte (IM) über jeweils eine der beiden flächenmäßig größten Seiten (xy-Ebene) der entsprechenden Platte miteinander thermisch verschweißt werden, besonders bevorzugt weisen die miteinander thermisch zu verschweißenden Platten identische Länge- und Breitedimensionen auf.

Die dünneren thermoplastischen Schaumstoffplatten (TS) als solche sind dem Fachmann prinzipiell bekannt. Geeignete thermoplastische Schaumstoffplatten sind beispielsweise in Form von Blends in der WO 2009/047487 offenbart. Beispielsweise können Platten aus amorphen, kristallinen oder teilkristallinen thermoplastischen Schaumstoffen eingesetzt werden.

Vorzugsweise ist die dünnere thermoplastische Schaumstoffplatte (TS) ein Partikelschaumstoff oder ein Extrusionsschaumstoff auf Basis mindestens eines Polymers, ausgewählt aus der Gruppe, bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe, bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe, bestehend aus Polystyrol, Polystyrolcopolymeren, Polyethersulfon und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der dünneren thermoplastischen Schaumstoffplatte (TS) üblicherweise enthaltene Polymer ein Polystyrolcopolymer, bedeutet dies, dass zur Herstellung des Polymers, neben dem monomeren Styrol, mindestens ein weiteres Monomer (Comonomer) erforderlich ist. Als Comonomere zu Styrol eignen sich prinzipiell alle mit Styrol polymerisierbaren Monomere. Vorzugsweise sind mindestens 50 Gew.-% Styrol in dem Polystyrolcopolymer einpolymerisiert, bezogen auf das Gesamtgewicht des Polystyrolcopolymers.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit einem bis acht Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Ist die dünnere thermoplastische Schaumstoffplatte (TS) ein Partikelschaumstoff, so ist der Partikelschaumstoff vorzugsweise Styropor oder Neopor, die kommerziell von der BASF SE erhältlich sind. In diesem ist das Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als "Blends" bezeichnet. Als mindestens ein weiteres Polymer eignen sich alle dem Fachmann bekannten Polymere, wie beispielsweise die vorstehend beschriebenen Polymere.

Am meisten bevorzugt ist die dünnere thermoplastische Schaumstoffplatte (TS) ein Extrusionsschaumstoff aus einem extrudierten Polystyrol, der beispielsweise unter der Bezeichnung "Styrodur" von der BASF SE kommerziell erhältlich ist.

Sofern die dünnere thermoplastische Schaumstoffplatte (TS) ein Extrusionsschaumstoff ist, wird vorzugsweise an denjenigen Seiten (Oberflächen), die mit einer anderen Ausgangsplatte verbunden werden sollen, die Schäumhaut entfernt. Gegebenenfalls kann dies auch an den sonstigen Seiten (Oberflächen) der entsprechenden Ausgangsplatte durchgeführt werden. Das Entfernen der Schäumhaut (die auch als "Extrusionshaut" bezeichnet wird) als solches ist dem Fachmann bekannt. Dies bedeutet, dass die entsprechende Ausgangsplatte an den zu verbindenden Oberflächen, vorzugsweise an den thermisch zu verschweißenden Seiten (Oberflächen), schäumhautfrei ist.

Vorzugsweise ist die dünnere thermoplastische Schaumstoffplatte (TS) zu mindestens 90 Gew.-%, bevorzugt zu mindestens 95 Gew.-%, besonders bevorzugt zu 98 Gew.-%, aus mindestens einem Thermoplast hergestellt (bezogen auf das Gesamtgewicht der dünneren thermoplastischen Schaumstoffplatte (TS)).

Weitere Komponenten, die in der dünneren thermoplastischen Schaumstoffplatte (TS) enthalten sein können, die also beispielsweise bei deren Herstellungsprozess in das Volumen der Platte integriert werden, können beispielsweise Flammschutzmittel, Nukleierungsmittel, Farbstoffe, IR-Absorber oder sonstige Additive sein. Die vorgenannten Komponenten sind allesamt dem Fachmann bekannt Sofern beim Herstellungsprozess der entsprechenden thermoplastischen Platte Treibmittel eingesetzt werden, beispielsweise im Rahmen eines Extrusionsverfahrens, werden diese Treibmittel bei der Bestimmung des vorgenannten Gesamtgewichts der dünneren thermoplastischen Schaumstoffplatte (TS) nicht mitberücksichtigt. Diese ist insbesondere dadurch begründet, dass Treibmittel mit der Zeit aus der entsprechenden Platte ausdiffundieren. Demzufolge werden bei der Bestimmung des Gesamtgewichts der dünneren thermoplastischen Schaumstoffplatte (TS) nur diejenigen Komponenten/Verbindungen mitberücksichtigt, die keine Gase sind und folglich dauerhaft in der entsprechenden dünneren Ausgangsplatte vorhanden sind und die nicht ausdiffundieren können.

Die dünnere thermoplastische Schaumstoffplatte (TS) kann prinzipiell beliebige Werte hinsichtlich des mittleren Zelldurchmessers (auch als "Zellgröße" oder "mittlere Zellgröße" bezeichnet) aufweisen. In der Praxis weisen thermoplastische Schaumstoffplatten einen mittleren Zelldurchmesser auf, der größer ist als 1 µm (entspricht 1 000 nm). Der mittlere Zelldurchmesser kann nach der Norm "ASTM D 3576" (Bestimmung der Zellgröße von harten Schaumstoffen; Ausgabe 2015), also nach dem Fachmann bekannten Methoden gemessen werden. Die spezifischen Werte des mittleren Zelldurchmessers in einer konkreten Platte können nach dem Fachmann bekannten Methoden eingestellt werden, beispielsweise durch die gewählten Druck- oder Temperaturwerte bei der Plattenherstellung und/oder die Art oder Menge des Treibmittels und/oder die Art oder Menge von Nukleierungsmittel, beispielsweise während des Extrusionsverfahrens.

Vorzugsweise weist die dünnere thermoplastische Schaumstoffplatte (TS) einen mittleren Zelldurchmesser ≥ 10 µm, vorzugsweise ≥ 50 µm und besonders bevorzugt ≥ 100 µm auf. Die Obergrenze des mittleren Zelldurchmessers der dünneren thermoplastischen Schaumstoffplatte (TS) beträgt in der Regel nicht mehr als 500 µm, vorzugsweise maximal 250 µm.

Die dünneren thermoplastischen Schaumstoffplatten (TS) können prinzipiell beliebige Dichten aufweisen. Vorzugsweise beträgt die Dichte der dünneren thermoplastischen Schaumstoffplatten (TS) 10 bis 100 g/l, mehr bevorzugt 10 bis 50 g/l.

Weiterhin ist es bevorzugt, dass die dünnere Schaumstoffplatte (TS) eine Wärmeleitfähigkeit λ ≤ 0,035 W/(mK), vorzugsweise ≤ 0,030 W/(mK) aufweist. Die Wärmeleitfähigkeit der dünneren Schaumstoffplatte (TS) wird nach EN 12667 oder EN 12939 bei einer Mitteltemperatur von 10 ± 0,3 °C bestimmt.

In einer bevorzugten Ausführungsform der vorliegenden Erfindung sind die zu verschweißenden Oberflächen von mindestens einer dünneren thermoplastischen Schaumstoffplatte (TS) mit strukturierten Vertiefungen versehen. Die strukturierten Vertiefungen können beliebige Strukturen beziehungsweise Strukturformen annehmen. Vorzugsweise sind die strukturierten Vertiefungen punktförmig, streifenförmig (linienförmig) oder gitterförmig, besonders bevorzugt streifenförmig. Die strukturierten Vertiefungen können 20 bis 80 %, vorzugsweise 40 bis 60 %, insbesondere 50 %, der jeweiligen Oberfläche einer dünneren thermoplastischen Schaumstoffplatte (TS) ausmachen. Beim thermischen Verschweißen wird im Rahmen der vorliegenden Erfindung an den Stellen, an denen die Oberfläche der dünneren thermoplastischen Schaumstoffplatte (TS) die strukturierten Vertiefungen aufweist, vorzugsweise keine Schweißnaht ausgebildet. Da sich bei dieser Ausführungsform der vorliegende Erfindung beim thermischen Verschweißen an den Stellen, an denen die Oberfläche der dünneren thermoplastischen Schaumstoffplatte (TS) die strukturierten Vertiefungen aufweist, keine Schweißnaht ausbildet, bedeutet dies, dass die auf den eingesetzten dünneren thermoplastischen Schaumstoffplatten (TS) enthaltenen strukturierten Vertiefungen auch nach dem thermischen Verschweißen erhalten bleiben und somit im Verfahrensprodukt (den zumindest zweilagigen Platten als solchen) ebenfalls vollständig oder zumindest weitgehend, vorzugsweise vollständig enthalten sind.

Die Strukturen können im Rahmen der vorliegenden Erfindung auch als Muster oder Strukturierungsmuster bezeichnet werden. Eine Struktur ist aus mindestens einer Strukturform, die auch als Struktureinheit bezeichnet werden kann, aufgebaut. Unter einer Struktureinheit (Strukturform) wird im Rahmen der vorliegenden Erfindung die kleinste Einheit in einem Muster (Struktur) verstanden. Eine solche Struktureinheit kann beispielsweise ein Karo, eine Raute, ein Rechteck, ein Quadrat oder eine Linie (Streifen) sein. Gegebenenfalls können solche Struktureinheiten sich abwechseln beziehungsweise miteinander kombiniert werden. So sind Muster denkbar, die aus mehreren verschiedenen Struktureinheiten aufgebaut sind, beispielsweise aus mehreren Streifen von unterschiedlicher Stärke (Breite) und/oder Tiefe, die sich beispielsweise mit Rauten oder Quadraten abwechseln. So können auch in einem Gitter unterschiedliche Struktureinheiten enthalten sein, beispielsweise Quadrate von unterschiedlicher Größe, die abwechselnd angeordnet sind.

Die Abstände zwischen den einzelnen Struktureinheiten einer strukturierten Vertiefung auf der jeweiligen Oberfläche der dünneren thermoplastischen Schaumstoffplatte (TS) können beliebige Werte (Größen) annehmen, beispielsweise 30 mm. Vorzugsweise beträgt der Abstand zwischen den einzelnen Struktureinheiten der strukturierten Vertiefungen maximal 20 mm (Durchschnittswert über das gesamte Muster), insbesondere beträgt der Abstand 7,5 bis 20 mm. Die Breite einer Struktureinheit (Struktur), beispielsweise der Durchmesser eines Punktes (bei einer punktförmigen Struktur) oder die Breite einer Linie (bei einer linien- oder gitterförmigen Struktur) kann beliebig sein, vorzugsweise ist sie im Bereich von 1 bis 25 mm, mehr bevorzugt 5 bis 20 mm, insbesondere 10 bis 15 mm.

Ebenso können die Vertiefungen als solche (also die Tiefe einer Strukturierung) beliebige Werte (Größen) annehmen. So ist es denkbar, dass in Teilbereichen einer Oberfläche die gleichen Struktureinheiten/Muster enthalten sind, die sich jedoch hinsichtlich ihrer Tiefe unterscheiden. Die Vertiefungen sind (als Durchschnittswert) in aller Regel nicht größer (tiefer) als 25 % der entsprechenden Plattendicke, wobei dieser Wert bei sehr dünnen thermoplastischen Schaumstoffplatten (beispielsweise mit einer Dicke von weniger als 10 mm) auch etwas höher ausfallen kann. Hat eine dünne thermoplastischen Schaumstoffplatte beispielsweise eine Dicke von 100 mm, so haben die Vertiefungen (im Durchschnitt) vorzugsweise eine Tiefe von maximal 20 mm. Bevorzugt weisen die strukturierten Vertiefungen im Durchschnitt eine Tiefe von nicht größer als 10 mm auf, besonders bevorzugt eine Tiefe von nicht größer als 5 mm (jeweils bezogen auf die Teile der Oberfläche der entsprechenden dünneren thermoplastischen Schaumstoffplatte, die keine Vertiefungen aufweisen). Die Mindesttiefe einer strukturierten Vertiefung im Rahmen der vorliegenden Erfindung beträgt 0,5 mm, bevorzugt nur 1 mm, besonders bevorzugt 2 mm (als Durchschnittswerte jeweils bezogen auf die Teile der Oberfläche der entsprechenden dünneren thermoplastischen Schaumstoffplatte (TS), die keine Vertiefungen aufweisen).

Die strukturierten Vertiefungen können auf der entsprechenden Oberfläche einer dünneren thermoplastischen Schaumstoffplatte (TS) nach beliebigen, dem Fachmann bekannten Methoden erzeugt werden. Vorzugsweise werden die strukturierten Vertiefungen durch Schneiden, Glühdrahtschneiden, Hobeln oder Fräsen, insbesondere durch Fräsen, der Oberfläche der dünneren thermoplastischen Schaumstoffplatten (TS) erzeugt. Die strukturierten Vertiefungen können auf einer Oberfläche (der Ausgangsplatte) erzeugt werden, die eine Schäumhaut aufweist oder die schäumhautfrei ist. Das Hobeln oder Fräsen zur Erzeugung einer Oberfläche mit strukturierten Vertiefungen unterscheidet sich von dem vorstehend beschriebenen Hobeln oder Fräsen zur Erzeugung einer schäumhautfreien Oberfläche insbesondere dahingehend, dass im Fall der Erzeugung einer Oberfläche mit strukturierten Vertiefungen das Hobeln oder Fräsen an ausgesuchten Stellen/Teilbereichen der entsprechenden Oberfläche unter Erzeugung der gewünschten Struktureinheit/Muster gezielt durchgeführt wird. Alternativ können die strukturierten Vertiefungen auf der entsprechenden Oberfläche auch in situ während des thermischen Verschweißens beispielsweise unter Verwendung von Vorrichtungen, die Noppen oder Rillen aufweisen, erzeugt werden.

Die im erfindungsgemäßen Verfahren eingesetzte mindestens eine dünnere Platte (IM) als solche, die aus einem anorganischen Isolationsmaterial hergestellt ist, ist dem Fachmann ebenfalls bekannt.

Im Rahmen der vorliegenden Erfindung ist das anorganische Isolationsmaterial vorzugsweise ausgewählt aus der Gruppe bestehend aus Aerogelen, Xerogelen, Mineralfasern oder Bimsstein, mehr bevorzugt aus Mineralfasern oder Bimsstein, besonders bevorzugt aus Glaswolle, Steinwolle, Basaltfasern oder Bimsstein, ganz besonders bevorzugt aus Glaswolle oder Steinwolle.

Aerogele oder Xerogele sowie die entsprechenden Herstellungsverfahren sind dem Fachmann prinzipiell bekannt, siehe beispielsweise WO 2012/000917. Im Allgemeinen wird unter einem Xerogel ein solches Material verstanden, das durch ein Sol-Gel-Verfahren hergestellt wurde, wobei die flüssige Phase durch Trocknung unterhalb der kritischen Temperatur und oberhalb des kritischen Drucks der flüssigen Phase ("subkritische Bedingungen") aus dem Gel entfernt wurde. Im Gegensatz dazu spricht man im Allgemeinen von Aerogelen, wenn die Entfernung der flüssigen Phase aus dem Gel während des Sol-Gel-Prozesses unter "überkritischen Bedingungen" durchgeführt wurde.

Aerogele werden vorzugsweise nach dem Sol-Gel-Verfahren hergestellt und sind beispielsweise in EP-A2 665 876, WO 2010/046074 oder EP-A2 597 072 beschrieben. Das kommerziell von der BASF SE (Ludwigshafen, Deutschland) erhältliche Produkt "Slentex" ist ein Beispiel für ein Aerogel.

In einer bevorzugten Ausführungsform der Erfindung ist das Aerogel ein anorganisches Aerogel auf Basis von Metalloxiden, vorzugsweise auf Basis von mindestens einem Oxid von Silicium, Aluminium oder Titanium, insbesondere auf Basis von mindestens einem Oxid von Silicium (Silicat).

Mineralfasern sowie deren Herstellung sind dem Fachmann ebenfalls bekannt. Beispiele für Mineralfasern sind Asbest, Basaltfasern, Glaswolle oder Steinwolle.

Die mindestens eine dünnere Platte (IM) kann prinzipiell beliebige Dichten aufweisen. Vorzugsweise beträgt die Dichte der mindestens einen dünneren Platte (IM) 50 bis 500 g/l, mehr bevorzugt 80 bis 300 g/l.

Im Rahmen der vorliegenden Erfindung wird die zumindest zweilagige Platte durch thermisches Verschweißen hergestellt.

Das Verbinden der Ausgangsplatten in Form von thermischem Verschweißen kann nach allen, dem Fachmann bekannten Arten, durchgeführt werden. Entsprechende Verfahren zum thermischen Verschweißen sind beispielsweise in WO 2015/011016 beschrieben.

Der Effekt des Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das Verschweißen mit einer Vorrichtung ausgewählt aus einem Heizschwert, einem Heizgitter oder einer Heizplatte durchgeführt, wobei die Vorrichtung gegebenenfalls mit Noppen oder Rillen versehen sein kann. Beispielsweise kann das Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum Verschweißen Noppen oder Rillen aufweist, können auf diese Weise auch strukturierte Vertiefungen auf die entsprechende Oberfläche der zu verbindenden Schaumstoffplatten aufgebracht werden. Anstelle der Verwendung einer Vorrichtung wie eines Heizschwerts oder eines Heizgitters ist es auch möglich, das Verschweißen, also die Wärmezufuhr, unter Verwendung von elektromagnetischer Strahlung teilweise oder vollständig durchzuführen.

Durch das thermische Verschweißen bildet sich zwischen den zu verschweißenden Oberflächen (der Ausgangsplatten), also zwischen den beiden dünneren Platten (TS) und (IM), eine Schweißnaht (S) aus. Anstelle des Begriffs "Schweißnaht" können auch die Begriffe "Schweißhaut" oder "Schweißzone" verwendet werden. Die Schweißnaht (S) kann in Abhängigkeit des verwendeten Verschweißungsverfahrens prinzipiell eine beliebige Dicke annehmen, vorzugsweise ist die Dicke der Schweißnaht (S) jedoch nicht allzu groß, also nicht größer als 500 µm.

Im Rahmen der vorliegenden Erfindung wird beim thermischen Verschweißen mindestens ein Heizelement eingesetzt. Gegebenenfalls können aber auch zwei oder mehrere Heizelemente verwendet werden. Dabei kann es sich um dieselben Heizelemente oder um unterschiedliche Heizelemente handeln. In einer Ausführungsform der vorliegenden Erfindung ist es bevorzugt, dass mindestens zwei Heizelemente verwendet werden. Vorzugsweise werden die Heizelemente auf zueinander parallelen Ebenen eingesetzt. Vorzugsweise erfolgt das thermische Verschweißen als kontaktloses Verschweißen, das heißt, die Oberflächen des Heizelements und die Oberflächen der zu verschweißenden Platten berühren sich nicht.

Weiterhin ist es bevorzugt, dass die Heizelemente Heizplatten sind, vorzugsweise IR-Strahler mit einer Oberflächentemperatur von 200 bis 1 000 °C, insbesondere von 300 bis 700 °C.

In einer bevorzugten Ausführungsform der vorliegenden Erfindung wird das thermische Verschweißen nach einem Verfahren durchgeführt, das die folgenden Schritte a) bis e) umfasst:
a) eine dünnere thermoplastische Schaumstoffplatte (TS) und eine dünnere Platte (IM) werden in einem Abstand a parallel zueinander ausgerichtet, sodass sie einen Zwischenraum ausbilden,
b) in den Zwischenraum werden mindestens zwei Heizelemente auf parallel zueinander versetzten Ebenen und parallel zu den beiden dünneren Platten (TS) und (IM) eingeführt, wobei sich die Oberflächen der beiden dünneren Platten (TS) und (IM) und die Heizelemente nicht gegenseitig berühren,
c) die Heizelemente werden so weit zwischen die beiden dünneren Platten (TS) und (IM) eingeführt, bis zwischen den beiden dünneren Platten (TS) und (IM) bezogen auf jede Stelle der jeweiligen Oberfläche der beiden dünneren Platten (TS) und (IM) zumindest zeitweise sich mindestens eines der Heizelemente befunden hat,
d) die Heizelemente werden vollständig aus dem Zwischenraum wieder entfernt,
e) mindestens eine der beiden dünneren Platten (TS) und (IM) wird gegen die Oberfläche der jeweiligen anderen dünneren Platte (TS) und (IM) gedrückt.

Der Abstand a ist in Schritt a) dabei so gewählt, dass mindestens zwei Heizelemente zwischen den entsprechenden Ausgangsplatten in parallel zueinander versetzten Ebenen so bewegt werden können, dass sie die Oberflächen der entsprechenden Ausgangsplatten nicht berühren (siehe auch Ausführungen zum nachfolgenden Schritt b)). Dabei weisen die Heizelemente auch einen gewissen Abstand zueinander auf, um ein reibungsloses Ein- und Ausführen der Heizelemente zu gewährleisten. Der Abstand a ist umso größer, je höher die Anzahl an Heizelementen im erfindungsgemäßen Verfahren ist, die auf parallel zueinander versetzten Ebenen in den Zwischenraum ein- und aus diesem ausgeführt werden.

Vorzugsweise beträgt in Schritt a) der Abstand a 10 bis 150 mm, insbesondere 15 bis 80 mm.

In Schritt b) dieser Ausführungsform des erfindungsgemäßen Verfahrens werden in den Zwischenraum mindestens zwei Heizelemente auf parallel zueinander versetzten Ebenen und parallel zu den beiden dünneren Schaumstoffplatten eingeführt, wobei sich die Oberflächen der beiden dünneren Schaumstoffplatten und die Heizelemente nicht gegenseitig berühren.

Als Heizelemente können erfindungsgemäß alle dem Fachmann bekannten Heizelemente eingesetzt werden, die beweglich sind und ein kontaktloses Verschweißen im Sinne der vorliegenden Erfindung ermöglichen. Vorzugsweise werden erfindungsgemäß zwei Heizelemente verwendet, weiterhin ist es bevorzugt, dass die Heizelemente Heizplatten sind. Sofern mehr als zwei Heizelemente verwendet werden, ist es bevorzugt, eine gerade Anzahl von Heizelementen auf parallel zueinander versetzten Ebenen einzusetzen. Bevorzugte Heizplatten sind IR-Strahler mit einer Oberflächentemperatur von 200 bis 1 000 °C, insbesondere von 300 bis 700 °C. Sie können beispielsweise in der Außenposition (Ruheposition) vorgeheizt werden oder elektrisch über Widerstandsheizungen oder mittels Wärmeträgerölen erhitzt werden.

Vorzugsweise werden erfindungsgemäß zwei identische Heizelemente, insbesondere Heizplatten, verwendet, gegebenenfalls können die Heizelemente auch hinsichtlich ihrer Beschaffenheit, insbesondere Dicke, unterschiedlich geartet sein. Die Dimensionen der Heizelemente werden in Abstimmung mit den entsprechenden Dimensionen der zu verschweißenden Ausgangsplatten gewählt. Prinzipiell können die Heizelemente sowohl hinsichtlich ihrer Länge (x-Richtung), ihrer Breite (y-Richtung) als auch ihrer Dicke (z-Richtung) jeweils größer und/oder kleiner als die entsprechenden Dimensionierungen der zu verschweißenden Ausgangsplatten sein. Bevorzugt ist, dass die Heizelemente, insbesondere Heizplatten, in ihrer Länge (x-Richtung) jeweils gleich groß oder maximal 35 % größer sind als die entsprechenden Längen (x-Richtung) der zwei dünneren thermoplastischen Schaumstoffplatten und die Heizelemente in ihrer Breite (y-Richtung) 30 bis 140 %, vorzugsweise 60 bis 120 %, der entsprechenden Breite (y-Richtung) der zwei dünneren Schaumstoffplatten betragen.

Im Rahmen dieser Ausführungsform werden vorzugsweise in Schritt b) zwei Heizelemente aus jeweils zueinander entgegengesetzten Richtungen in den Zwischenraum eingeführt und/oder es werden vorzugsweise zwei Heizelemente in Schritt d) in jeweils zueinander entgegengesetzten Richtungen aus dem Zwischenraum wieder entfernt.

Prinzipiell ist es denkbar, dass beide Ausgangsplatten in Schritt e) gegeneinander gedrückt werden, also so lange aufeinander zu bewegt werden, bis der Abstand a gleich null ist. Vorzugsweise wird erfindungsgemäß aber nur eine der beiden Ausgangsplatten gegen die jeweils andere Ausgangsplatte gedrückt. Bei einer bezogen auf die Räumlichkeit horizontalen Anordnung der Ausgangsplatten ist es bevorzugt, dass die räumlich gesehen obere Ausgangsplatte gegen die untere Ausgangsplatte gedrückt wird. Dies erfolgt vorzugsweise unter Verwendung einer entsprechenden Greifvorrichtung, mit der die Ausgangsplatten sowohl angehoben als auch unter Anwendung von Druck gegen die unteren Platten verschoben werden können. Die unteren Ausgangsplatten können auch auf einer Senkvorrichtung aufliegen, die bei der Herstellung von höherlagigen Schaumstoffplatten entsprechend nach unten bewegt werden kann. Vorzugsweise wird die Senkvorrichtung aber während der Durchführung der erfindungsgemäßen Schritte a) bis e) nicht bewegt. Ein Absenken der Senkvorrichtung erfolgt vorzugsweise erst vor der Wiederholung der Schritte a) bis e), um eine drei- oder höherlagige Schaumstoffplatte herzustellen.

Weiterhin ist es bevorzugt, dass in dieser Ausführungsform des erfindungsgemäßen Verfahrens im Rahmen von Schritt e) ein Verpressen der thermisch zu verschweißenden zusammengefügten dünnen Schaumstoffplatten durchgeführt wird. Das Verpressen erfolgt im Allgemeinen im Sekunden- bis Minutenbereich und/oder bei einem Pressdruck von 0,01 bis 0,5 bar, vorzugsweise von 0,1 bis 0,5 bar.

Weiterhin ist es im Rahmen der vorstehenden Ausführungsform bevorzugt, dass das Verbinden durch thermisches Verschweißen erfolgt und
i) zwischen den beiden dünneren Platten (TS) und (IM) eine Schweißnaht (S) gebildet wird, und/oder
ii) zwei Heizelemente verwendet werden und/oder die Heizelemente Heizplatten sind, vorzugsweise IR-Strahler mit einer Oberflächentemperatur von 200 bis 1 000 °C, insbesondere von 300 bis 700 °C, und/oder
iii) die Heizelemente in den Schritten b) und d) mit einer Geschwindigkeit von 0,1 bis 5 m/s, vorzugsweise von 0,3 bis 3 m/s, bewegt werden, und/oder
iv) in Schritt b) zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) maximal 20 Sekunden, vorzugsweise maximal 10 Sekunden, insbesondere maximal 5 Sekunden, beträgt.

In einer bevorzugten Ausführungsform der vorliegenden Erfindung wird auf mindestens einer Oberfläche der zumindest zweilagigen Platte mindestens eine weitere dünnere Platte (IM) durch thermisches Verschweißen aufgebracht, wobei die mindestens eine weitere dünnere Platte (IM) senkrecht zur Schweißnaht (S) aufgebracht wird.

In Figur 2 ist eine zweilagige Platte aus einer dünneren thermoplastischen Platte (TS) und einer dünneren Platte (IM) dargestellt, auf die senkrecht zur Schweißnaht (S) eine weitere dünnere Platte (IM) aufgebracht ist. Die Schweißnaht (S) ist in Figur 2 nicht dargestellt.

Es ist weiterhin bevorzugt, dass die erfindungsgemäße zumindest zweilagige Platte
i) eine Wärmefreisetzungsrate FIGRA von ≤ 120 W/s, bevorzugt von ≤ 20 W/s, mehr bevorzugt von ≤ 10 W/s, aufweist, und/ oder
ii) während 600 s eine gesamte Wärme THR₆₀₀ₛ von ≤ 7,5 MJ, bevorzugt von ≤ 2,5 MJ, mehr bevorzugt von ≤ 1,0 MJ, freisetzt, und/oder
iii) bei dem Brandtest gemäß EN ISO 11925-2 (2010) eine Flammhöhe von ≤ 150 mm aufweist.

Bei dem Brandtest gemäß EN ISO 11925-2 (2010) wird eine Flammhöhe vorzugsweise an der Schweißnaht der im 90° gedrehten zumindest zweilagigen Platte bestimmt. Gemäß EN ISO 11925-2 darf bei Flächenbeflammung und, wenn erforderlich, bei Kantenbeflammung, sowie im Falle mehrlagiger Produkte an den um 90° gedrehten und an der Verbindungsstelle beflammten Proben bei einer Beflammungsdauer von 30 s die vertikale Flammenausbreitung innerhalb von 60 s nach Beginn der Beflammung 150 mm oberhalb des Beflammungspunktes nicht überschreiten.

Ein weiterer Gegenstand der vorliegenden Erfindung ist eine zumindest zweilagige Platte, erhältlich nach dem vorstehend beschriebenen Verfahren.

Dabei ist es bevorzugt, dass die erfindungsgemäße zumindest zweilagige Platte
i) einen Wert FIGRA von ≤ 120 W/s, bevorzugt von ≤ 20 W/s, mehr bevorzugt von ≤ 10 W/s, aufweist, und/oder
ii) während 600 s eine gesamte Wärme THR₆₀₀ₛ von ≤ 7,5 MJ, bevorzugt von ≤ 2,5 MJ, mehr bevorzugt von ≤ 1,0 MJ, freisetzt, und/oder
iii) bei dem Brandtest gemäß EN ISO 11925-2 (2010) eine Flammhöhe von ≤ 150 mm aufweist.

Ein weiterer Gegenstand der vorliegenden Erfindung ist die Verwendung einer solchen zumindest zweilagigen Platte als Brandschutz für die Außenfassade eines Bauwerks.

Ein weiterer Gegenstand der vorliegenden Erfindung ist die Außenwand (AW) eines Bauwerks, auf die eine erfindungsgemäße zumindest zweilagige Platte aufgebracht ist, vorzugsweise ist die erfindungsgemäße zumindest zweilagige Platte so auf die Außenwand (AW) aufgebracht, dass eine flächenmäßig größte Seite (xy-Ebene) einer dünneren thermoplastischen Ausgangsplatte (TS) mit der Außenwand (AW) des Bauwerks verbunden ist.

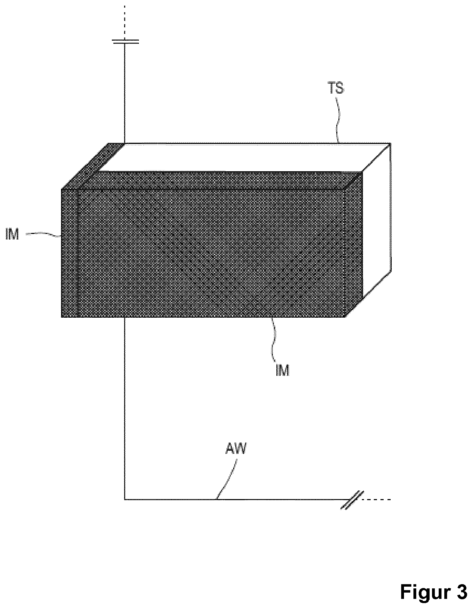

In Figur 3 ist eine Außenwand (AW) eines Bauwerks dargestellt, auf die eine erfindungsgemäße zweilagige Platte aufgebracht ist, wobei die erfindungsgemäße zweilagige Platte so auf die Außenwand (AW) aufgebracht ist, dass eine flächenmäßig größte Seite (xy-Ebene) der dünneren thermoplastischen Ausgangsplatte (TS) mit der Außenwand (AW) des Bauwerks verbunden ist. Des Weiteren ist auf die erfindungsgemäße zweilagige Platte eine weitere dünnere Platte (IM) senkrecht zur Schweißnaht (S) aufgebracht. Die Schweißnaht (S) ist in Figur 3 nicht dargestellt.

Nachfolgend wird die vorliegende Erfindung anhand von Beispielen näher erläutert.

### Beispiele

In den nachfolgenden Beispielen werden die zumindest zweilagigen Platten durch thermisches Verschweißen hergestellt. Das thermische Verschweißen wird in einer Verschweißungsanlage durchgeführt, die sinngemäß in WO 2015/011016 in den dortigen Versuchen verwendet worden ist. Die in den vorliegenden Beispielen eingesetzte Verschweißungsanlage umfasst somit Aufnahmeplatten, die die zu verschweißenden Ausgangsplatten (dünnere thermoplastische Schaumstoffplatte (TS) sowie dünnere Platte (IM)) in Abmessungen bis 1 300 x 660 mm aufnehmen können. Die Aufnahmeplatten und das zu verschweißende Material sind vertikal angeordnet. Soweit im nachfolgenden Text nicht anders ausgeführt, sind in den vorliegenden Beispielen die entsprechenden Parameter gemäß den Versuchen von WO 2015/011016 verwendet worden.

Die zu verschweißenden Ausgangsplatten, also mindestens eine dünnere thermoplastische Schaumstoffplatte (TS) und mindestens eine dünnere Platte (IM), haben jeweils die folgenden Dimensionen:
- Länge (x-Richtung):: 1 000 mm
- Breite (y-Richtung):: 500 mm
- Dicke (z-Richtung):: Die jeweiligen Werte sind in den nachfolgenden Tabellen 1 und 2 für die einzelnen Beispiele angegeben.

Das thermische Verschweißen wird so durchgeführt, dass erfindungsgemäß in der zumindest zweilagigen Platte nach dem Verschweißungsvorgang jeweils eine flächenmäßig gleichgroße Seite, die von der dünneren thermoplastischen Schaumstoffplatte (TS) bzw. von der dünneren Platte (IM) stammt, miteinander verbunden werden. Die jeweiligen Seiten der entsprechenden Ausgangsplatten haben genau die gleichen Dimensionen, es handelt sich somit um eine der beiden flächenmäßig größten Seiten der jeweiligen Ausgangsplatten, die durch die x-Richtung und die y-Richtung definiert werden.

Zwei Heizelemente der Abmessung 1 320 und 680 mm werden auf die gewünschte Schweißtemperatur aufgeheizt. Das Aufheizen geschieht kontaktlos durch IR-Strahler, kann aber auch durch induktive Beheizung erfolgen.

Von den Heizstationen werden die Heizelemente in den Zwischenraum zwischen die zu verschweißenden Platten (Ausgangsplatten (TS) und (IM)) bewegt. Dabei werden die Heizelemente zunächst beschleunigt und dann wieder abgebremst, so dass die Heizelemente mittig vor den zu verschweißenden Platten stehen bleiben. Dort bleiben die Heizelemente für eine definierte Heizzeit stehen.

Am Ende der Heizzeit werden die Heizelemente wieder beschleunigt und verlassen den Zwischenraum zwischen den zu verschweißenden Platten. Genauere Informationen in diesem Zusammenhang können den Tabellen 1 und 2 entnommen werden.

Sobald die Heizelemente den Zwischenraum zwischen den zu verschweißenden Platten verlassen haben, werden diese zusammengepresst. Dabei bewegen sich beide Aufnahmeplatten aufeinander zu und pressen die zu verschweißenden Platten mit einem definierten Anpressdruck zusammen.

Bei den in Tabelle 1 aufgeführten Beispielen 1 bis 3 und A wird der vorgenannte Verschweißungsvorgang einfach durchgeführt, wobei dadurch eine genau zweilagige dünnere Platte erhalten wird. Im Gegensatz dazu wird bei den in Tabelle 2 aufgeführten Beispielen 4 bis 6 und C eine genau dreilagige Platte erhalten. Bei diesen Beispielen wird der vorstehend beschriebene Verschweißungsvorgang zweimal durchgeführt.

### Herstellung einer zweilagigen Platte

Es werden folgende dünnere Ausgangsplatten eingesetzt:
a) Platten (IM) aus einem anorganischen Isolationsmaterial und
b) thermoplastische Platten (TS)

Sofern als thermoplastische Ausgangsplatte b) Styrodur eingesetzt wird, wird bei diesen Ausgangsplatten vor dem Durchführen des thermischen Verschweißens an den zu verschweißenden Flächen die Schäumhaut durch Fräsen entfernt.

### Erfindungsgemäße Beispiele

### Beispiel 1

a) Platte aus anorganischem Aerogel (Slentex der BASF SE):
   λ = 19 mW/(mK); Dicke 10 mm
b) Neopor:
   Dichte 15 g/l; Platten geschäumt aus Neopor 2200 (BASF SE; λ = 32 mW/(mK); Dicke 160 mm)

### Beispiel 2

a) Platte aus Steinwolle (Isover Akustic EP 5 Dämmplatte; Dicke 15 mm)
b) Neopor:
   Dichte 15 g/l; Platten geschäumt aus Neopor 2200 (BASF SE; λ = 32 mW/(mK); Dicke 160 mm)

### Beispiel 3

a) Platte aus Steinwolle (IsoverAkustic EP 5 Dämmplatte; Dicke 15 mm)
b) Styrodur:
   Dichte 32 g/l; (BASF SE; λ = 33 mW/(mK); Dicke 140 mm)

### Vergleichsbeispiele

### Beispiel A

a) Platte aus Polyurethan (Dichte 34 g/l; Dicke 10 mm)
b) Neopor:
   Dichte 15 g/l; Platten geschäumt aus Neopor 2200 (BASF SE; λ = 32 mW/(mK); Dicke 160 mm)

### Beispiel B

### a) Einlagige Neoporplatte:

Dichte 15 g/l; Platte geschäumt aus Neopor 2200 (BASF SE; Dicke 160 mm)

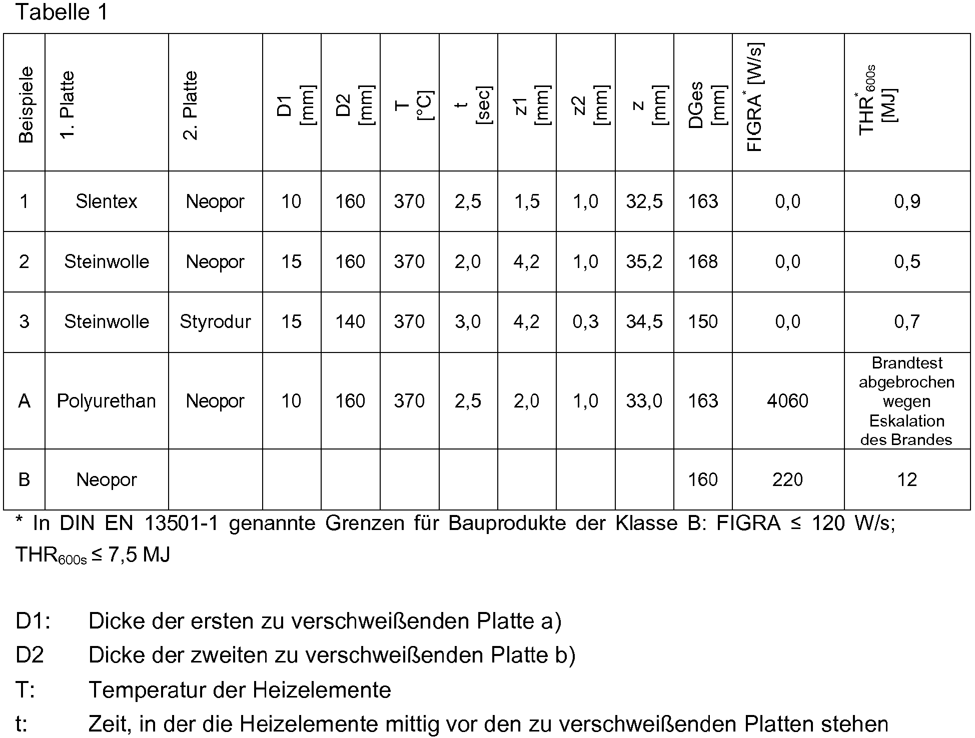

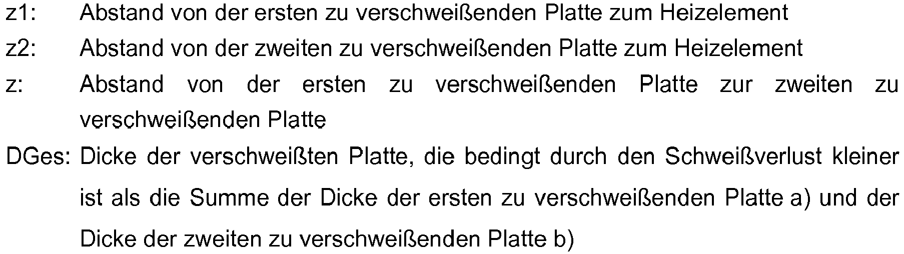

### Herstellung einer dreilagigen Platte

Durch zweifaches Ausführen des Schweißvorgangs gemäß Tabelle 1 werden folgende Kombinationen von dreilagigen Platten hergestellt:

| | | | | |
|---|---|---|---|---|
| Slentex | - | Neopor | - | Slentex |
| Steinwolle | - | Neopor | - | Steinwolle |
| Steinwolle | - | Styrodur | - | Steinwolle |
| Polyurethan | - | Neopor | - | Polyurethan |

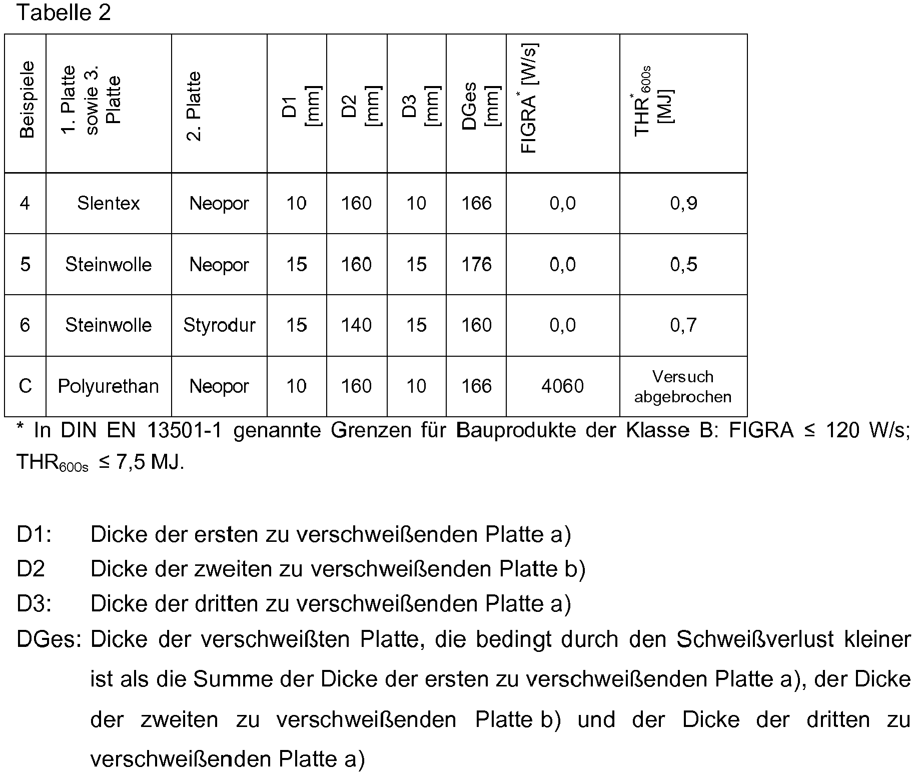

Die so verschweißten Platten, sowie die einlagige Platte aus Neopor, werden in einem Brandtest geprüft. Bei dem Brandtest handelt es sich um den SBI (single-burner-item) Test gemäß DIN EN 13823 (2015).

Die erfindungsgemäßen zumindest zweilagigen Platte unterschreiten bei dem sogenannten SBI (single-burner-item)-Test gemäß DIN EN 13823 (2015) die im Rahmen der Baustoffklassifizierung gemäß DIN EN 13501-1 (2010) genannten Grenzen hinsichtlich der "Wärmefreisetzungsrate (FIGRA)" und der "Gesamten freigesetzten Wärme während 600 s (THR₆₀₀ₛ)", die für Einstufung in Klasse B relevant sind. Die Wärmefreisetzungsrate (FIGRA) ist nach DIN EN 13501-1 (2010) das Maximum des Quotienten aus der Probe und dem zugehörigen Zeitpunkt, wobei ein THR-Schellenwert von 0,2 MJ benutzt wird. Die erfindungsgemäßen Platten zeigen somit im Gegensatz zu einer reinen thermoplastischen Schaumstoffplatte oder einer Platte gemäß Beispiel A oder C im SBI-Test ein deutlich reduziertes Brandverhalten.

### Herstellung einer zweilagigen Platte mit strukturierten Vertiefungen in der dünneren thermoplastische Platte (TS)

Es werden folgende dünnere Ausgangsplatten eingesetzt:
a) Platten (IM) aus einem anorganischen Isolationsmaterial und
b) thermoplastische Platten (TS), bei denen in die Oberfläche, die mit den Platten (IM) verbunden werden sollen, in einem Abstand von je 30 mm 30 mm breite Streifen mit einer Tiefe t eingefräst wurden. Die Streifen waren parallel zur kürzeren Seite der Platten angeordnet.

Sofern als thermoplastische Ausgangsplatte b) Styrodur eingesetzt wird, wird bei diesen Ausgangsplatten vor dem Durchführen des thermischen Verschweißens an den zu verschweißenden Flächen zunächst die Schäumhaut durch Fräsen entfernt. Danach werden die Streifen eingefräst.

### Erfindungsgemäße Beispiele

### Beispiel 7

a) Platte aus Steinwolle (Isover Akustic EP 5 Dämmplatte; Dicke 15 mm)
b) Neopor:
   Dichte 15 g/l; Platten geschäumt aus Neopor 2200 (BASF SE; λ = 32 mW/(mK); Dicke 160 mm, Tiefe t der Streifen 6 mm)

### Beispiel 8

a) Platte aus Steinwolle (Isover Akustic EP 5 Dämmplatte; Dicke 15 mm)
b) Styrodur: Dichte 32 g/l; (BASF SE; λ = 33 mW/(mK); Dicke 140 mm; Tiefe t der Streifen 4 mm)

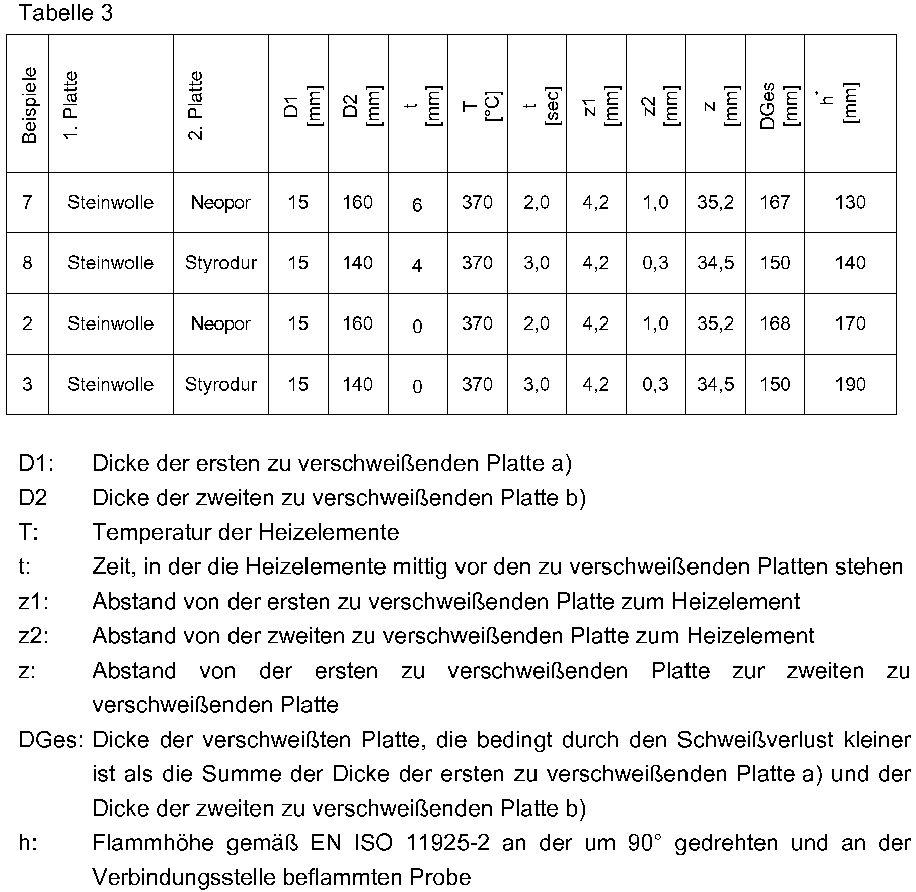

Die Versuche gemäß Tabelle 3 zeigen, dass das Brandverhalten im Sinne von EN ISO 11925-2 der erfindungsgemäßen Platten weiter verbessert werden kann, sofern die dünnere thermoplastische Ausgangsplatte (TS) mit strukturierten Vertiefungen versehen ist.

## Patentansprüche

1. Verfahren zur Herstellung einer zumindest zweilagigen Platte durch thermisches Verschweißen von mindestens einer dünneren thermoplastischen Schaumstoffplatte (TS) und mindestens einer dünneren Platte (IM), wobei die mindestens eine dünnere thermoplastische Schaumstoffplatte (TS) eine größere Dicke aufweist als die mindestens eine dünnere Platte (IM) und die mindestens eine dünnere Platte (IM) aus einem anorganischen Isolationsmaterial hergestellt ist.

2. Verfahren gemäß Anspruch 1, **dadurch gekennzeichnet, dass**
i) die mindestens eine dünnere thermoplastische Schaumstoffplatte (TS) mindestens um den Faktor 2, bevorzugt mindestens um den Faktor 5, mehr bevorzugt mindestens um den Faktor 10, dicker ist als die mindestens eine dünnere Platte (IM), und/oder
ii) die mindestens eine dünnere thermoplastische Schaumstoffplatte (TS) höchstens um den Faktor 50, bevorzugt höchstens um den Faktor 30, dicker ist als die mindestens eine dünnere Platte (IM), und/oder
iii) die mindestens eine dünnere Platte (IM) eine Dicke (z-Richtung) von 1 bis 40 mm, bevorzugt von 3 bis 30 mm, mehr bevorzugt von 5 bis 20 mm, aufweist, und/oder
iv) die mindestens eine dünnere thermoplastische Schaumstoffplatte (TS) eine Dicke (z-Richtung) von 80 bis 400 mm, bevorzugt von 90 bis 300 mm, mehr bevorzugt von 100 bis 200 mm, aufweist, und/oder
v) die zu verschweißenden Oberflächen von mindestens einer dünneren thermoplastischen Schaustoffplatte (TS) mit strukturierten Vertiefungen versehen sind, vorzugsweise sind die strukturierten Vertiefungen punktförmig, streifenförmig oder gitterförmig, besonders bevorzugt streifenförmig.

3. Verfahren gemäß einem der Ansprüche 1 oder 2, **dadurch gekennzeichnet, dass** das anorganische Isolationsmaterial ausgewählt ist aus der Gruppe bestehend aus Aerogelen, Xerogelen, Mineralfasern oder Bimsstein, bevorzugt aus Mineralfasern oder Bimsstein, mehr bevorzugt aus Glaswolle, Steinwolle, Basaltfasern oder Bimsstein, insbesondere bevorzugt aus Glaswolle oder Steinwolle.

4. Verfahren gemäß einem der Ansprüche 1 bis 3, **dadurch gekennzeichnet, dass** die mindestens eine dünnere thermoplastische Schaumstoffplatte (TS) ein Partikelschaumstoff oder ein Extrusionsschaumstoff ist auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon und Polyethylenterephthalat.

5. Verfahren gemäß einem der Ansprüche 1 bis 4, **dadurch gekennzeichnet, dass**
a) eine dünnere thermoplastische Schaumstoffplatte (TS) und eine dünnere Platte (IM) in einem Abstand a parallel zueinander ausgerichtet werden, sodass sie einen Zwischenraum ausbilden,
b) in den Zwischenraum werden mindestens zwei Heizelemente auf parallel zueinander versetzten Ebenen und parallel zu den beiden dünneren Platten (TS) und (IM) eingeführt, wobei sich die Oberflächen der beiden dünneren Platten (TS) und (IM) und die Heizelemente nicht gegenseitig berühren,
c) die Heizelemente werden so weit zwischen die beiden dünneren Platten (TS) und (IM) eingeführt, bis zwischen den beiden dünneren Platten (TS) und (IM) bezogen auf jede Stelle der jeweiligen Oberfläche der beiden dünneren Platten (TS) und (IM) zumindest zeitweise sich mindestens eines der Heizelemente befunden hat,
d) die Heizelemente werden vollständig aus dem Zwischenraum wieder entfernt,
e) mindestens eine der beiden dünneren Platten (TS) und (IM) wird gegen die Oberfläche der jeweiligen anderen dünneren Platte (TS) und (IM) gedrückt,
wobei vorzugsweise in Schritt b) zwei Heizelemente aus jeweils zueinander entgegengesetzten Richtungen in den Zwischenraum eingeführt werden und/oder vorzugsweise zwei Heizelemente in Schritt d) in jeweils zueinander entgegengesetzten Richtungen aus dem Zwischenraum wieder entfernt werden.

6. Verfahren gemäß einem der Ansprüche 1 bis 5, **dadurch gekennzeichnet, dass**
i) zwischen den beiden dünneren Platten (TS) und (IM) eine Schweißnaht (S) gebildet wird, und/oder
ii) zwei Heizelemente verwendet werden und/oder die Heizelemente Heizplatten sind, vorzugsweise IR-Strahler mit einer Oberflächentemperatur von 200 bis 1000 °C, insbesondere von 300 bis 700 °C, und/oder
iii) die Heizelemente in den Schritten b) und d) gemäß Anspruch 5 mit einer Geschwindigkeit von 0,1 bis 5 m/s, vorzugsweise von 0,3 bis 3 m/s, bewegt werden, und/oder
iv) in Schritt b) gemäß Anspruch 5 zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) gemäß Anspruch 5 maximal 20 Sekunden, vorzugsweise maximal 10 Sekunden, insbesondere maximal 5 Sekunden, beträgt.

7. Verfahren gemäß einem der Ansprüche 1 bis 6, **dadurch gekennzeichnet, dass**
i) die mindestens eine dünnere thermoplastische Schaumstoffplatte (TS) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, aufweist, und/oder
ii) die mindestens eine dünnere Platte (IM) eine Länge (x-Richtung) von 500 bis 2800 mm, vorzugsweise von 1000 bis 1500 mm und eine Breite (y-Richtung) von 200 bis 1250 mm, vorzugsweise von 500 bis 900 mm, aufweist, und/oder
iii) jede dünnere thermoplastische Schaumstoffplatte (TS) und jede dünnere Platte (IM) identische Werte für die Länge (x-Richtung) und die Breite (y-Richtung) aufweisen, und/oder
iv) die mindestens eine dünnere thermoplastische Schaumstoffplatte (TS) und die mindestens eine dünnere Platte (IM) über jeweils eine der beiden flächenmäßig größten Seiten (xy-Ebene) der entsprechenden Platte miteinander verbunden werden, besonders bevorzugt weisen die miteinander zu verbindenden Platten identische Länge- und Breitedimensionen auf.

8. Verfahren gemäß einem der Ansprüche 1 bis 7, **dadurch gekennzeichnet, dass**
i) die mindestens eine dünnere Platte (IM) eine Dichte von 50 bis 500 g/l, bevorzugt von 80 bis 300 g/l, aufweist, und/oder
ii) die mindestens eine dünnere thermoplastische Schaumstoffplatte (TS) eine Dichte von 10 bis 100 g/l, bevorzugt von 10 bis 50 g/l, aufweist.

9. Verfahren gemäß einem der Ansprüche 1 bis 8, **dadurch gekennzeichnet, dass** eine dreilagige Platte hergestellt wird durch thermisches Verschweißen von einer dünneren thermoplastischen Schaumstoffplatte (TS) und zwei dünneren Platten (IM), wobei jeweils eine dünnere Platten (IM) auf jeweils einer sich gegenüberliegenden Seite der dünneren thermoplastischen Schaumstoffplatte (TS) unter Erhalt der dreilagigen Platte, aufgebracht wird.

10. Verfahren gemäß Anspruch 9, **dadurch gekennzeichnet, dass** durch thermisches Verschweißen eine vier- oder höherlagige Platte hergestellt wird, wobei, ausgehend von der dreilagigen Platte, eine zweite dünnere thermoplastische Schaumstoffplatte (TS) auf eine von einer dünneren Platte (IM) stammenden Seite der dreilagigen Platte aufgebracht wird, die daraus erhaltene vierlagige Platte abwechselnd insgesamt vier Lagen aus dünneren thermoplastischen Schaumstoffplatten (TS) und dünneren Platten (IM) aufweist und die erste und zweite dünnere thermoplastische Schaumstoffplatte (TS) sich auf jeweils einer gegenüberliegenden Seite einer dünneren Platte (IM) befinden, wobei gegebenenfalls zum Erhalt von höherlagigen Platten, das abwechselnde Aufbringen einer weiteren dünneren Platte (IM) oder einer dünneren thermoplastischen Schaumstoffplatte (TS) mindestens einfach wiederholt wird.

11. Verfahren gemäß einem der Ansprüche 1 bis 10, **dadurch gekennzeichnet, dass** auf mindestens einer Oberfläche der zumindest zweilagigen Platte mindestens eine weitere dünnere Platte (IM) durch thermisches Verschweißen aufgebracht wird, wobei die mindestens eine weitere dünnere Platte (IM) senkrecht zur Schweißnaht (S) aufgebracht wird.

12. Verfahren gemäß einem der Ansprüche 1 bis 11, **dadurch gekennzeichnet, dass** die zumindest zweilagige Platte
i) eine Wärmefreisetzungsrate FIGRA von ≤ 120 W/s, bevorzugt von ≤ 20 W/s, mehr bevorzugt von ≤ 10 W/s, aufweist, und/oder
ii) während 600 s eine gesamte Wärme THR₆₀₀ₛ von ≤ 7,5 MJ, bevorzugt von ≤ 2,5 MJ, mehr bevorzugt von ≤ 1 MJ, freisetzt, und/oder
iii) bei dem Brandtest gemäß EN ISO 11925-2 (2010) eine Flammhöhe von ≤ 150 mm aufweist.

13. Zumindest zweilagige Platte, erhältlich nach einem Verfahren gemäß einem der Ansprüche 1 bis 12.

14. Verwendung einer zumindest zweilagigen Platte gemäß Anspruch 13 als Brandschutz für die Außenfassade eines Bauwerkes.

15. Außenwand (AW) eines Bauwerks, auf die eine zumindest zweilagige Platte gemäß Anspruch 13 aufgebracht ist, vorzugsweise ist die zumindest zweilagige Platte so auf die Außenwand (AW) aufgebracht, dass eine flächenmäßig größte Seite (xy-Ebene) einer dünneren thermoplastischen Ausgangsplatte (TS) mit der Außenwand (AW) des Bauwerks verbunden ist.
